Europäisches Patentamt

European Patent Office

Office européen des brevets

(11) Veröffentlichungsnummer: **0 586 925 A1**

## (12) EUROPÄISCHE PATENTANMELDUNG

(21) Anmeldenummer: **93113041.3**

(22) Anmeldetag: **14.08.93**

(51) Int. Cl.⁵: **B01D 53/34**

(30) Priorität: **05.09.92 DE 4229736**

(43) Veröffentlichungstag der Anmeldung:
**16.03.94 Patentblatt 94/11**

(84) Benannte Vertragsstaaten:
**AT BE DK ES GB IT NL**

(71) Anmelder: **RWE Energie Aktiengesellschaft**
**Kruppstrasse 5**
**D-45128 Essen(DE)**

(72) Erfinder: **Heiting Bernd, Dipl. Ing.**
**Heckschenstrasse 59**
**W-47809 Krefeld(DE)**

(74) Vertreter: **Andrejewski, Walter, Dr. et al**
**Patentanwälte**
**Andrejewski, Honke & Partner**
**Postfach 10 02 54**
**D-45002 Essen (DE)**

(54) **Verfahren zum Betrieb einer Rauchgasentschwefelungsanlage und Anlage für die Durchführung des Verfahrens.**

(57) Verfahren zum Betrieb einer Rauchgasentschwefelungsanlage, die hinter einer Kesselfeuerung, insbes. hinter einer Kraftwerkskesselfeuerung, angeordnet ist und mit einer wäßrigen Waschflüssigkeit arbeitet, die feinteilige Sorptionsmittel sowie die bei der Entschwefelung entstehenden Reaktionsprodukte mitführt. Die Rauchgasreinigungsanlage weist einen Sorptionswaschturm (1), einen unteren Rauchgaseintritt (2) sowie einen oberen Rauchgasaustritt (3) am Sorptionswaschturm (1), einen Waschturmsumpf (4) unterhalb des Rauchgaseintritts sowie einen Waschflüssigkeitskreislauf auf. Der Waschflüssigkeitskreislauf wird aus dem unteren Teil des Sorptionswaschturms abgezogen. Er ist über zumindest eine Umwälzpumpe über ein Rohrleitungssystem sowie über im Sorptionswaschturm übereinander angeordnete Waschflüssigkeitseinführungsdüsen geführt, die einen Tropfenregen-Mengenstrom der Waschflüssigkeit erzeugen. Mit einem Teil der Waschflüssigkeit werden die Reaktionsprodukte der Entschwefelung als Suspension aus dem Sorptionswaschturm abgezogen und einem Separator zugeführt. Ein Teilmengenstrom des Tropfenregen-Mengenstromes wird im Bereich zwischen den Waschflüssigkeitseinführungsdüsen und der Oberfläche des Waschturmsumpfes aufgefangen. Dieser Teilmengenstrom wird unmittelbar aus dem Waschflüssigkeitskreislauf ausgeführt und in den Separator eingeführt. - Auch eine Anlage zur Durchführung des Verfahrens wird angegeben.

Fig. 2

Die Erfindung betrifft ein Verfahren zum Betrieb einer Rauchgasentschwefelungsanlage, die hinter einer Kesselfeuerung, insbes. hinter einer Kraftwerkskesselfeuerung, angeordnet ist und mit einer wäßrigen Waschflüssigkeit arbeitet, die feinteilige Sorptionsmittel sowie bei der Entschwefelung entstehende Reaktionsprodukte mitführt,

wobei die Rauchgasreinigungsanlage einen Sorptionswaschturm, einen unteren Rauchgaseintritt sowie einen obereren Rauchgasaustritt am Sorptionswaschturm, einen Waschturmsumpf unterhalb des Rauchgaseintritts sowie einen Waschflüssigkeitskreislauf aufweist,

wobei der Waschflüssigkeitskreislauf aus dem Waschturmsumpf abgezogen und über zumindest eine Umwälzpumpe, über ein Rohrleitungssystem sowie über im Sorptionswaschturm übereinander angeordnete Waschflüssigkeitseinführungsdüsen geführt ist, die einen Tropfenregen-Mengenstrom der Waschflüssigkeit erzeugen,

wobei mit einem Teil der Waschflüssigkeit Reaktionsprodukte der Entschwefelung als Suspension aus dem Sorptionswaschturm abgezogen und einem Separator zugeführt werden, der die Reaktionsprodukte von der Waschflüssigkeit trennt, und wobei die aus dem Separator abgezogene Waschflüssigkeit in den Waschflüssigkeitskreislauf zurückgeführt wird - und die Reaktionsprodukte der Verwertung und/oder der Entsorgung zugeführt werden. Der Ausdruck Waschturmsumpf bezeichnet den Bereich des Sorptionswaschturmes, in dem sich die Waschflüssigkeit ansammelt, aber auch die Ansammlung der Waschflüssigkeit selbst. Es versteht sich, daß der Sorptionswaschturm eine Einrichtung für die Nachspeisung von Waschwasser und für die Einspeisung von feinteiligen Sorptionsmitteln und ggf. anderen Additiven aufweist. Die Nachspeisung des Waschwassers in den Sorptionsturm erfolgt zumeist und in der Hauptsache durch Zugabe von Spülflüssigkeit zu den Tropfenabscheidern. Der Rest wird dem Waschturmsumpf zugegeben. Das feinteilige Sorptionsmittel wird zumeist dem Waschturmsumpf als Suspension bzw. trocken zugegeben. Die Erfindung betrifft fernerhin eine Rauchgasentschwefelungsanlage des vorstehend beschriebenen Aufbaus sowie der vorstehend beschriebenen Zweckbestimmung, die für das erfindungsgemäße Verfahren besonders geeignet ist.

Bei einem bekannten Verfahren zum Betrieb einer Rauchgasentschwefelungsanlage (DE 32 18 470 C3) befindet sich im oberen bis mittleren Bereich des Waschturmsumpfes im Waschturmsumpf ein Oxidationsrost für die Zuführung von Oxidationsluft mit entsprechenden Oxidationslufthauben. Auf diese Weise kann im Sumpf in bezug auf den pH-Wert eine Trennung der Waschflüssigkeit herbeigeführt werden. Durch die Trennung der Waschflüssigkeit mit Hilfe des Oxidationsrostes stellt sich in der oberen Zone ein bevorzugter pH-Wert von 4 bis 6 ein. Hier erfolgt eine Oxidation des Sulfits zum Sulfat. Unterhalb des Rostes wird durch Zugabe des Sorptionsmittels der pH-Wert angehoben. Hierbei soll eine Ausfällung des Gipses bewirkt werden, wobei die Suspension mit einem sehr hohen Kalziumsulfatgehalt aus der unteren Zone abgezogen wird. Im Rahmen dieser bekannten Maßnahmen wird mit Kalkstein als Sorptionsmittel gearbeitet. Im übrigen verlangt im Rahmen der bekannten Maßnahmen die Aufrechterhaltung des Waschflüssigkeitskreislaufs die auslegungsbedingte, vom Mengenstrom abhängige Energie.

Der Erfindung liegt die Aufgabe zugrunde, das eingangs beschriebene Verfahren so zu führen, daß der Waschflüssigkeitskreislauf mit beachtlich reduzierter Energie aufrechterhalten werden kann, und zwar mit für die Entschwefelung günstigem pH-Wert. Der Erfindung liegt fernerhin die Aufgabe zugrunde, eine Anlage anzugeben, die für die Durchführung des erfindungsgemäßen Verfahrens besonders geeignet ist.

Zur Lösung dieser Aufgabe lehrt die Erfindung, ausgehend von dem eingangs beschriebenen Verfahren, nach dem unabhängigen Patentanspruch 1, daß ein Teilmengenstrom des Tropfenregen-Mengenstromes im Bereich zwischen den Waschflüssigkeitseinführungsdüsen und der Oberfläche des Waschturmsumpfes aufgefangen und dieser Teilmengenstrom unmittelbar aus dem Waschflüssigkeitskreislauf ausgeführt und in den Separator eingeführt wird. - Im Rahmen der Erfindung kann insoweit mit den verschiedensten Separatoren gearbeitet werden. Im allgemeinen wird man mit einem oder mit mehreren Hydrozyklonen arbeiten. Es versteht sich, daß man im Rahmen des erfindungsgemäßen Verfahrens den Teilmengenstrom des Tropfenregen-Mengenstromes der ohnehin installierten oder zu installierenden Einrichtung für den Abzug der Suspension der Reaktionsprodukte aus dem Waschturmsumpf zuführen wird. Man kann so alle aus dem Sorptionswaschturm abzuziehenden Reaktionsprodukte der Entschwefelung mit dem Teilmengenstrom abziehen und dem Separator zuführen.

Bei der Rauchgasreinigung ist es an sich bekannt (DE 35 13 544 A1), einen Teilmengenstrom des Tropfenregen-Mengenstromes aufzufangen. Dazu wird mit einer trichterförmigen Auffangeinrichtung gearbeitet. Im Rahmen dieser bekannten Maßnahmen wird jedoch dieser Teilmengenstrom nicht in einen Separator eingeführt, sondern erneut als Waschflüssigkeit umgewälzt, um zwei getrennte Waschflüssigkeitskreisläufe zu erzielen.

Im Rahmen der Erfindung liegt es fernerhin, den Teilmengenstrom von mitgeführten feinteiligen Sorptionsmitteln zu befreien, wenn dieses möglich ist, und diese in den Sorptionsturm wieder einzuführen, während der von den feinteiligen Sorptionsmitteln befreite Teilmengenstrom in den Separator eingeführt wird. Diese Abtrennung der feinteiligen Sorptionsmittel kann im Waschturm oder außerhalb des Waschturmes erfolgen.

Bei dem erfindungsgemäßen Verfahren besteht jedenfalls die Möglichkeit, die Bemessung des Teilmengenstromes nach Maßgabe unterschiedlicher Betriebsverhältnisse betriebsmäßig zu verändern. Die mengenmäßige Bemessung des Teilmengenstromes bestimmt die Feststoffkonzentration in der Waschflüssigkeit.

Im Rahmen der Erfindung kann mit den verschiedensten Sorptionsmitteln gearbeitet werden. Bewährt ist es bei der Entschwefelung von Rauchgasen hinter Kesselanlagen, insbes. hinter Kraftwerkskesselanlagen, mit feinteiligem Kalkstein zu arbeiten, so daß als Reaktionsprodukt Calciumsulfit und, bei Oxidation im Sorptionswaschturm, Calciumsulfatdihydrat entsteht. Wird mit feinteiligem Kalkstein als Sorptionsmittel gearbeitet, so lehrt die Erfindung, daß der pH-Wert in der den Waschflüssigkeitsdüsen zugeführten Waschflüssigkeit auf einen Wert von 5,7 bis 5,9 eingestellt wird. Das ist für die Entschwefelungsreaktionen vorteilhaft.

Der pH-Wert des Teilmengenstromes wird maßgeblich beeinflußt von der $SO_2$-Rohgasfracht, der Umwälzmenge und der Sorptionsmittelzugabemenge. Es ist zu erwarten, daß sich der pH-Wert der aufgefangenen Flüssigkeit um mindestens 0,5 bis maximal 2 pH-Einheiten unter dem pH-Wert der umgewälzten Waschflüssigkeit einstellt. Der Energieaufwand für die Aufrechterhaltung des Waschflüssigkeitskreislaufs wird beachtlich reduziert.

Gegenstand der Erfindung ist auch eine Rauchgasentschwefelungsanlage des eingangs beschriebenen Aufbaus und der eingangs beschriebenen Zweckbestimmung. Die Rauchgasentschwefelungsanlage ist nach dem unabhängigen Patentanspruch 6 dadurch gekennzeichnet, daß im Sorptionswaschturm im Bereich zwischen den Waschflüssigkeitseinführungsdüsen und der Oberfläche des Waschturmsumpfes eine Einrichtung zum Auffangen eines Teilmengenstromes des Tropfenregen-Mengenstromes angeordnet und diese an eine Einrichtung für die Einführung des aufgefangenen Teilmengenstromes in den Separator angeschlossen ist, wobei alle aus dem Sorptionswaschturm abzuziehenden Reaktionsprodukte mit dem Teilmengenstrom abziehbar sind.

Nach bevorzugter Ausführungsform der Erfindung ist die Einrichtung zum Auffangen des Teilmengenstromes zentrisch im Sorptionswaschturm angeordnet. Dabei kann die Einrichtung zum Auffangen eines Teilmengenstromes des Tropfenregen-Mengenstromes als nach oben offener Schirm ausgeführt sein, wobei im tiefsten Punkt des Schirmes die Einrichtung für die Einführung des aufgefangenen Teilmengenstromes in den Separator angeschlossen ist. Es besteht aber auch die Möglichkeit, als Einrichtung zum Auffangen des Teilmengenstromes einen oben offenen Hohlzylinder mit geschlossenem Boden vorzusehen, wobei im Bereich des Bodens die Einrichtung für die Einführung des aufgefangenen Teilmengenstromes in den Separator angeschlossen ist. Nach bevorzugter Ausführungsform der Erfindung ist die Einrichtung zum Auffangen des Teilmengenstromes als oben und unten offener Rohrstutzen ausgeführt, dessen oberer Rand über die Oberfläche des Waschturmsumpfes ausreichend übersteht und dessen unterer Rand etwa nach Maßgabe der halben Höhe des Waschturmsumpfes in diesen eintaucht, wobei im Bereich der mittleren Höhe des Rohrstutzens die Einrichtung für die Einführung des aufgefangenen Teilmengenstromes angeschlossen ist. In diesem Zusammenhang lehrt die Erfindung fernerhin, daß der Durchmesser des Rohrstutzens so gewählt ist, daß der aufgefangene Teilmengenstrom groß genug ist, um zu verhindern, daß aus dem Waschturmsumpf Waschflüssigkeit in das Tauchrohr gesaugt und zum Separator abgeführt wird.

Jedenfalls besteht die Möglichkeit, die Einrichtung für die Einführung des aufgefangenen Teilmengenstromes in den Separator mit einer Ventileinrichtung bzw. geregelten Pumpen zu versehen, mit der der Teilmengenstrom mengenmäßig einstellbar ist. Im Rahmen der Erfindung liegt es, die Einrichtung zum Auffangen des Teilmengenstromes so auszubilden, daß, ähnlich wie in einem Absetzbecken, eine Voreindikkung des Gipses erreicht wird. Dann kann unter Umständen auf einen besonderen Separator in Form eines Hydrozyklons verzichtet werden.

Im folgenden wird die Erfindung anhand einer lediglich ein Ausführungsbeispiel darstellenden Zeichnung ausführlicher erläutert. Es zeigen

Fig. 1    das Schema einer Rauchgasentschwefelungsanlage, die nach dem erfindungsgemäßen Verfahren arbeitet,

Fig. 2    mit weiteren konstruktiven Einzelheiten einen Vertikalschnitt durch den Sorptionswaschturm des Gegenstandes der Fig. 1

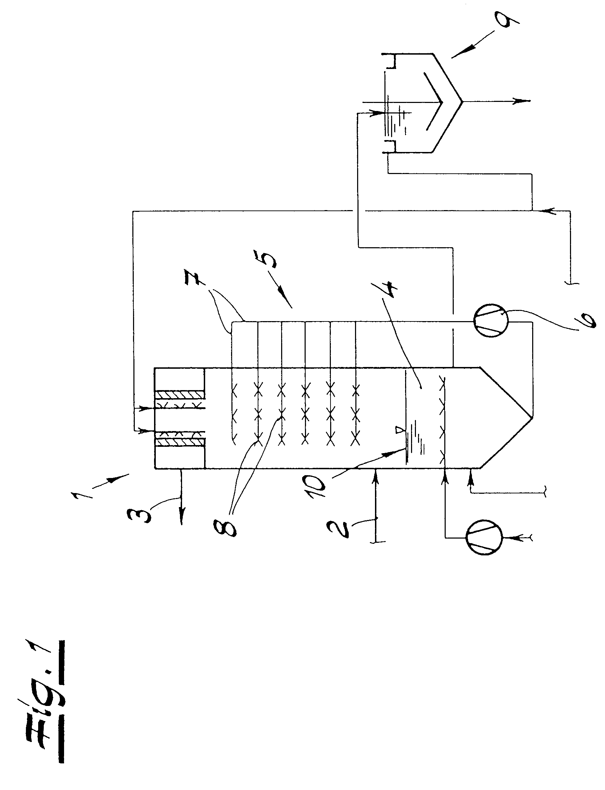

Die in Fig. 1 dargestellte Rauchgasentschwefelungsanlage besitzt im Ausführungsbeispiel einen Sorptionswaschturm 1, einen unteren Rauchgaseintritt 2 sowie einen oberen Rauchgasaustritt 3 am Sorptionswaschturm 1, einen Waschturmsumpf 4 unterhalb des Rauchgaseintritts 2 sowie einen Waschflüssigkeitskreislauf 5. Die Rauchgasentschwefelungsanlage arbeitet mit einer wäßrigen Waschflüssigkeit, die feinteilige Sorptionsmittel sowie die bei der Entschwefelung entstehenden Reaktionsprodukte mitführt. Im Ausführungsbeispiel mag es sich bei den feinteiligen Sorptionsmitteln um Kalkstein handeln, wobei die Reaktionsprodukte primär Schwefelsulfit sind, die im Prozeß zu Calciumsulfat-Dihydrat oxidiert werden.

Der Waschflüssigkeitskreislauf 5 wird aus dem unteren Teil des Sorptionswaschturms 1 über zumindest eine Umwälzpumpe 6, über ein Rohrleitungssystem 7 sowie über im Sorptionswaschturm 1 übereinander angeordnete Waschflüssigkeitseinführungsdüsen 8 geführt. Die Waschflüssigkeitseinführungsdüsen 8 erzeugen im Sorptionswaschturm 1 einen Tropfenregen-Mengenstrom. Ein Teilmengenstrom des Tropfenmengenstromes wird bei 11 abgezogen, wie weiter unten ausführlicher erläutert wird. Aus dem Waschturmsumpf 4 werden mit einem Teil Waschflüssigkeit abgesetzte Reaktionsprodukte der Entschwefelung als Suspension abgezogen und einem Separator 9 zugeführt, der die Reaktionsprodukte von der Waschflüssigkeit trennt. Im Ausführungsbeispiel und nach bevorzugter Ausführungsform ist der Separator 9 als Hydrozyklon oder als ein Aggregat von Hydrozyklonen ausgeführt. Die aus dem Separator 9 abgezogene Waschflüssigkeit wird in den Waschflüssigkeitskreislauf 5 zurückgeführt. Die Reaktionsprodukte werden der Verwertung und/oder Entsorgung zugeführt. Es versteht sich, daß der Sorptionswaschturm 1 Einrichtungen für die Nachspeisung von Waschwasser und feinteiligen Sorptionsmitteln aufweist, die nicht gezeichnet wurden.

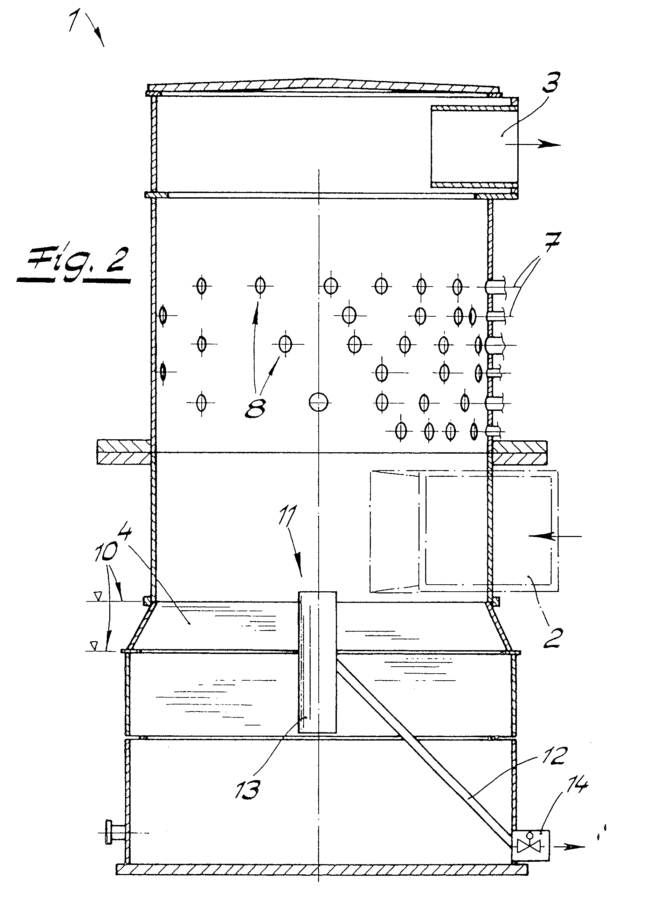

Im Sorptionswaschturm 1 ist im Bereich zwischen den Waschflüssigkeitseinführungsdüsen 8 und der Oberfläche 10 des Waschturmsumpfes 4 eine Einrichtung 11 zum Auffangen eines Teilmengenstromes des Tropfenregen-Mengenstromes angeordnet und diese ist an eine Einrichtung 12 für die Einführung des aufgefangenen Teilmengenstromes an den Separator 9 angeschlossen. Insoweit wird insbesondere auf die Fig. 2 verwiesen. Es handelt sich dabei im Ausführungsbeispiel um die Einrichtung 12, die zur Überführung der Suspension aus den Reaktionsprodukten des Entschwefelungsvorganges ohnehin zu installieren ist. Im Ausführungsbeispiel und nach bevorzugter Ausführungsform der Erfindung werden alle aus dem Sorptionswaschturm abzuziehenden Reaktionsprodukte der Entschwefelung mit dem Teilmengenstrom dem Separator 9 zugeführt.

Die Einrichtung 11 zum Auffangen des Teilmengenstromes ist zentrisch im Sorptionswaschturm 1 angeordnet. Im Ausführungsbeispiel und nach bevorzugter Ausführungsform der Erfindung besteht die Einrichtung 11 zum Auffangen des Teilmengenstromes aus einem Rohrstutzen 13, der oben und unten offen ist und dessen oberer Rand über die Oberfläche 10 des Waschturmsumpfes 4 übersteht, während der untere Rand etwa nach Maßgabe der halben Höhe des Waschturmsumpfes 4 in diesen eintaucht. Dabei ist die Anordnung so getroffen, daß im Bereich der mittleren Höhe des Rohrstutzens 13 die Einrichtung 12 für die Einführung des aufgefangenen Teilmengenstromes in den Separator angeschlossen ist. Es empfiehlt sich, den Durchmesser des Rohrstutzens 13 so zu wählen, daß der aufgefangene Teilmengenstrom groß genug ist, um zu verhindern, daß aus dem Waschturmsumpf Waschflüssigkeit in das Tauchrohr gesaugt und zum Separator geführt wird. Jedenfalls besteht die Möglichkeit, die Einrichtung 12 für die Einführung des Teilmengenstroms in den Separator 9 mit einer Ventileinrichtung 14 zu versehen, mit der der Teilmengenstrom mengenmäßig einstellbar ist. Die Einrichtung 11 zum Auffangen des Teilmengenstromes könnte auch als nach oben konkaver Schirm oder als oben offene zylindrische Hülse ausgeführt sein, die mit einem geschlossenen Boden versehen ist, wobei an den Schirm im Bereich des tiefsten Punktes und an die zylindrische Hülse im Bereich des Bodens die Einrichtung 12 für die Einführung des aufgefangenen Teilmengenstromes in den Separator 9 angeschlossen ist. Hier könnte über die Ventileinrichtung 14 ein aufgefangener Überschuß des Teilmengenstromes als Überlauf auf die Oberfläche 10 des Waschturmsumpfes 4 abgeführt werden.

Im folgenden wird die Erfindung und werden die erreichten Effekte durch Beispielsrechnungen erläutert:

Beispielrechnung für die Dimensionierung einer Auffangapparatur im Sorptionsturm:

| Rauchgasvolumenstrom: | 1 000 000 m³/h (n,tr) |
|---|---|
| SO$_2$-Rohgaskonzentration: | 2 000 mg/m³ (n,tr) |
| SO$_2$-Wirkungsgrad: | 90 % |
| abgeschiedene SO$_2$-Menge: | 1 800 kg/h |
| produzierte Gips-Menge: | 4 900 kg/h |
| Feststoffkonzentration (Gips) im Waschflüssigkeitskreislauf; | 10 Gew % |
| Wirkungsgrad Separator (Hydrozyklon): | 90 % |
| Teilmengenstrom zum Separator (Hydrozyklon): | 55 m³/h |
| Waschflüssigkeits-Umwälzmege Sorptionsturm: | 10 000 m³/h |
| Querschnittsfläche Sorptionsturm: | 120 m² |

Bemessung Querschnittsfläche der Auffangapparatur:

$$>> \quad \frac{55}{10\ 000} \quad \times \quad 120 \ m^2 \quad = 0,66 \ m^2$$

Beispielrechnung:

Gegenüberstellung Sorptionsturm mit Auffangvorrichtung und ohne Auffangvorrichtung:

1. Mit Auffangvorrichtung:

| Rauchgasvolumenstrom: | 1 000 000 m³/h (n,tr) |
|---|---|
| SO$_2$-Rohgaskonzentration: | 2 000 mg/m³ (n,tr) |
| SO$_2$-Wirkungsgrad: | 90 % |
| pH-Wert Waschflüssigkeit zum Separator: | < 5,3 |
| pH-Wert Waschflüssigkeitskreislauf: | 5,8 |
| Stöchiometrie: | < 1,05 |
| erforderliche Waschflüssigkeits-Umwälzmenge: | 10 000 m³/h |

2. Ohne Auffangvorrichtung

| Rauchgasvolumenstrom: | 1 000 000 m³/h (n,tr) |
|---|---|
| SO$_2$-Rohgaskonzentration: | 2 000 mg/m³ (n,tr) |
| SO$_2$-Wirkungsgrad: | 90 % |
| pH-Wert Waschflüssigkeitskreislauf: | 5,3 |
| Stöchiometrie: | < 1,05 |
| erforderliche Waschflüssigkeits-Umwälzmenge: | 12 000 m³/h |

**Patentansprüche**

1. Verfahren zum Betrieb einer Rauchgasentschwefelungsanlage, die hinter einer Kesselfeuerung, inbes. hinter einer Kraftwerkskesselfeuerung, angeordnet ist und mit einer wäßrigen Waschflüssigkeit arbeitet, die feinteilige Sorptionsmittel sowie die bei der Entschwefelung entstehenden Reaktionsprodukte mitführt,
wobei die Rauchgasreinigungsanlage einen Sorptionswaschturm, einen unteren Rauchgaseintritt sowie einen oberen Rauchgasaustritt am Sorptionswaschturm, einen Waschturmsumpf unterhalb des Rauchgaseintritts sowie einen Waschflüssigkeitskreislauf aufweist,

wobei der Waschflüssigkeitskreislauf aus dem Waschturmsumpf abgezogen und über zumindest eine Umwälzpumpe, über ein Rohrleitungssystem sowie über im Sorptionswaschturm übereinander angeordnete Waschflüssigkeitseinführungsdüsen geführt ist, die einen Tropfenregen-Mengenstrom der Waschflüssigkeit erzeugen,

wobei mit einem Teil der Waschflüssigkeit Reaktionsprodukte der Entschwefelung als Suspension aus dem Sorptionswaschturm abgezogen und einem Separator zugeführt werden, der die Reaktionsprodukte von der Waschflüssigkeit trennt, und wobei die aus dem Separator abgezogene Waschflüssigkeit in den Waschflüssigkeitskreislauf zurückgeführt wird - und die Reaktionsprodukte der Verwertung und/oder der Entsorgung zugeführt werden, **dadurch gekennzeichnet,** daß ein Teilmengenstrom des Tropfenregen-Mengenstromes im Bereich zwischen den Waschflüssigkeitseinführungsdüsen und der Oberfläche des Waschturmsumpfes aufgefangen und dieser Teilmengenstrom unmittelbar aus dem Waschflüssigkeitskreislauf ausgeführt und in den Separator eingeführt wird.

2. Verfahren nach Anspruch 1, dadurch gekennzeichnet, daß mit feinteiligem Kalkstein als Sorptionsmittel gearbeitet wird und der pH-Wert in der den Waschflüssigkeitsdüsen zugeführten Waschflüssigkeit auf einen Wert von 5,7 bis 5,9 eingestellt wird.

3. Rauchgasentschwefelungsanlage des im Oberbegriff des Patentanspruches 1 angegebenen Aufbaus sowie der im Oberbegriff des Patentanspruches 1 angegebenen Funktion, dadurch gekennzeichnet, daß im Sorptionswaschturm (1) im Bereich zwischen den Waschflüssigkeitseinführungsdüsen (8) und der Oberfläche (10) des Waschturmsumpfes (4) eine Einrichtung (11) zum Auffangen eines Teilmengenstroms des Tropfenregen-Mengenstromes angeordnet und dies an eine Einrichtung (12) für die Einführung des aufgefangenen Teilmengenstromes in den Separator (9) angeschlossen ist.

4. Anlage nach Anspruch 3, dadurch gekennzeichnet, daß die Einrichtung (11) zum Auffangen des Teilmengenstromes zentrisch im Sorptionswaschturm (1) angeordnet ist.

5. Anlage nach einem der Ansprüche 3 oder 4, dadurch gekennzeichnet, daß die Einrichtung (11) zum Auffangen des Teilmengenstromes als nach oben konkav gekrümmter Schirm ausgeführt ist, wobei an dem tiefsten Punkt des Schirmes die Einrichtung (12) für die Einführung des aufgefangenen Teilmengenstromes in den Separator (9) angeschlossen ist.

6. Anlage nach einem der Ansprüche 3 oder 4, dadurch gekennzeichnet, daß die Einrichtung (11) zum Auffangen des Teilmengenstromes als nach oben offener Hohlzylinder mit geschlossenem Boden ausgeführt ist, wobei im Bereich des Bodens die Einrichtung (12) für die Einführung des aufgefangenen Teilmengenstromes in den Separator (9) angeschlossen ist.

7. Anlage nach einem der Ansprüche 3 oder 4, dadurch gekennzeichnet, daß die Einrichtung (11) zum Auffangen des Teilmengenstromes als oben und unten offener Rohrstutzen (13) ausgeführt ist, dessen oberer Rand über die Oberfläche des Waschturmsumpfes (4) übersteht und dessen unterer Rand etwa nach Maßgabe der halben Höhe des Waschturmsumpfes (4) in diesen eintaucht, und daß im Bereich der mittleren Höhe des Rohrstutzens (13) die Einrichtung (12) für die Einführung des aufgefangenen Teilmengenstromes in den Separator (9) angeschlossen ist.

8. Anlage nach Anspruch 7, dadurch gekennzeichnet, daß der Durchmesser des Rohstutzens (13) so gewählt wird, daß der aufgefangene Teilmengenstrom groß genug ist, um zu verhindern, daß aus dem Waschturmsumpf Waschflüssigkeit in das Tauchrohr gesaugt und zum Separator abgeführt wird.

9. Anlage nach einem der Ansprüche 3 bis 8 dadurch gekennzeichnet, daß die Einrichtung (12) für die Einführung des aufgefangenen Teilmengenstromes in den Separator (9) eine Ventileinrichtung oder eine regelbare Pumpe (14) aufweist, mit der der Teilmengenstrom mengenmäßig einstellbar ist.

Fig. 1

Fig. 2

Europäisches
Patentamt

**EUROPÄISCHER RECHERCHENBERICHT**

Nummer der Anmeldung

EP 93 11 3041

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | US-A-4 301 127 (S. L. GOODSTINE ET AL.) <br> --- | | B01D53/34 |
| A | US-A-4 374 812 (MASUMI ATSUKAWA; ET AL.) <br> ----- | | |

RECHERCHIERTE
SACHGEBIETE (Int.Cl.5)

B01D

Der vorliegende Recherchenbericht wurde für alle Patentansprüche erstellt

| Recherchenort | Abschlußdatum der Recherche | Prüfer |
|---|---|---|
| DEN HAAG | 20. Dezember 1993 | Pyfferoen, K |